# EUROPEAN PATENT APPLICATION

(11) **EP 3 428 134 A1**
(43) Date of publication of application: **16.01.2019**
(21) Application number: 17762994.6
(22) Date of filing: 28.02.2017
(51) Int. Cl.: C03C 21/00

(54) **CHEMICALLY STRENGTHENED GLASS**

(30) Priority: 08.03.2016 JP 2016044674
(71) Applicant: AGC INC., Chiyoda-ku, Tokyo 1008405 (JP)
(72) Inventor: NAKAGAWA Koji, Tokyo 100-8405 (JP); OTA Shinya, Tokyo 100-8405 (JP); NIHEI Toshifumi, Tokyo 100-8405 (JP); HATANO Maya, Tokyo 100-8405 (JP); ISHIBASHI Hiroki, Shizuoka 4210302 (JP); YAMASHITA Shuichi, Fukuoka 8120894 (JP); NAKANO Atsushi, Tokyo 100-8405 (JP)
(74) Representative: Müller-Boré & Partner Patentanwälte PartG mbB
(86) International application number: PCT/JP2017/007637
(87) International publication number: WO 2017/154654

(57) **Abstract**

The present invention relates to a chemically strengthened glass having a first principal surface and a second principal surface facing the first principal surface, at least a portion of the first principal surface being chemically strengthened, wherein the depth of a compressive stress layer in at least a portion of the first principal surface continuously changes. This chemically strengthened glass can be suitably used in an application in which chemical strengthening characteristics that differ among different regions in the same plane are desired in a chemically strengthened glass.

## Description

### TECHNICAL FIELD

The present invention relates to a chemically strengthened glass.

### BACKGROUND ART

In recent years, a chemically strengthened glass is used in a cover glass and the like of mobile devices such as a mobile phone and a smart phone, and display devices such as a television, a personal computer and a touch panel (see Patent Document 1 and the like).

As described in Patent Document 1, a chemical strengthening treatment of a glass is generally conducted by dipping a glass sheet in a melt of a metal salt (for example, potassium nitrate) containing metal ions (for example, K ions) having large ionic radius, thereby substituting metal ions (for example, Na ions and Li ions) having small ionic radius in the glass sheet with the metal ions having large ionic radius, and forming a compressive stress layer on the surface of the glass sheet.

### PRIOR ART DOCUMENT

### PATENT DOCUMENT

Patent Document 1: JP-A-2013-028506

### SUMMARY OF THE INVENTION

### PROBLEMS THAT THE INVENTION IS TO SOLVE

However, in the chemically strengthened glass as described in Patent Document 1, the depth of the compressive stress layer in the same surface is basically the same. Therefore, the chemically strengthened glass has not always been optimum in uses requiring different chemical strengthening properties between different regions in the same surface of a chemically strengthened glass.

In view of the above, the present invention has an object to provide a chemically strengthened glass that can be suitably used in uses requiring different chemical strengthening properties between different regions in the same surface of a chemically strengthened glass.

### MEANS FOR SOLVING THE PROBLEMS

To solve the above problems, according to one embodiment of the present invention, a chemically strengthened glass including a first main surface and a second main surface opposite the first main surface, wherein at least a part of the first main surface is chemically strengthened, and a depth of a compressive stress layer in at least a part of the first main surface continuously changes, is provided.

### ADVANTAGEOUS EFFECTS OF THE INVENTION

According to one embodiment of the present invention, a chemically strengthened glass that can be suitably used in uses requiring different chemical strengthening properties between different regions in the same surface of a chemically strengthened glass can be provided.

### BRIEF DESCRIPTION OF THE DRAWINGS

[Fig. 1] Fig. 1 is a schematic diagram of a chemically strengthened glass according to a first embodiment of the present invention. Fig. 1(a) is a perspective view of the chemically strengthened glass, Fig. 1(b) is a cross-sectional view of the chemically strengthened glass in XZ plane, and Fig. 1(c) is a cross- sectional view of the chemically strengthened glass in YZ plane.
[Fig. 2] Fig. 2 is a schematic diagram of a heat treatment step in a method for manufacturing a chemically strengthened glass according to the first embodiment of the present invention.
[Fig. 3] Fig. 3 is a schematic diagram of a chemically strengthened glass according to a modification example of the first embodiment. Fig. 3(a) is a perspective view of the chemically strengthened glass, Fig. 3(b) is a cross-sectional view of the chemically strengthened glass in XZ plane containing a dotted line L', and
Fig. 3(c) is a cross-sectional view of the chemically strengthened glass in YZ plane containing a dotted line L.
[Fig. 4] Fig. 4 is a schematic diagram of a heat treatment step in a method for manufacturing a chemically strengthened glass according to a modification example of the first embodiment of the present invention.
[Fig. 5] Fig. 5 is a schematic diagram of a chemically strengthened glass according to a second embodiment of the present invention. Fig. 5(a) is a perspective view of the chemically strengthened glass, and Fig. 5(b) is a cross-sectional view of the chemically strengthened glass in YZ plane containing a first straight line L1.
[Fig. 6] Fig.6 is a schematic diagram of a chemical strengthening treatment step in a method for manufacturing a chemically strengthened glass according to a second embodiment of the present invention.
[Fig. 7] Fig. 7 is a schematic diagram of a chemically strengthened glass according to a third embodiment of the present invention. Fig. 7(a) is a perspective view of the chemically strengthened glass, and Fig. 7(b) is a cross-sectional view of the chemically strengthened glass in YZ plane containing a first straight line L1 and a second straight line L2.
[Fig. 8] Fig. 8 is a graph showing the results obtained by measuring K ion concentrations and DOL in a plurality of points on the first straight line in the chemically strengthened glass of Example 1.
[Fig. 9] Fig. 9 is a graph showing the change of K ion concentrations in a depth direction at points P0 and P1 in the chemically strengthened glass of Example 2.

### MODE FOR CARRYING OUT THE INVENTION

The embodiments of the present invention are described in detail below by reference to the drawings.

In the present description, coordinates are defined by arrows at the lower left, in the drawings for explaining the embodiment, and as necessary, the embodiment is described using the coordinates. The term "X direction" in the present description indicates not only a direction toward the point from the root of arrows showing X coordinate, but a direction toward the root from the point in 180° reversal. Similarly, the terms "Y direction" and "Z direction" indicate not only directions toward the point from the root of arrows showing Y and Z coordinates, respectively, but directions toward the root from the point in 180° reversal. In the present description, Z direction and Y direction are called plane directions, and X direction is called a sheet thickness direction.

In the present description, the terms such as "parallel" and "vertical" allow deviation to an extent that does not impair the effect of the present invention. For example, the deviation of about ±5° is allowed on the basis of the positional relationship of "parallel" and "vertical" in the strict sense.

The chemically strengthened glass of the present embodiment is a chemically strengthened glass including a first main surface and a second main surface opposite the first main surface, wherein at least a part of the first main surface is chemically strengthened, and a depth of a compressive stress layer (DOL) in at least a part of the first main surface continuously changes.

The chemically strengthened glass of the present embodiment can be preferably used in uses requiring different chemical strengthening properties between different regions in the same surface of a chemically strengthened glass.

Expected cases are specifically exemplified below. For example, in the case of expecting a window glass of automobiles, a region (for example, a central region of a glass sheet) through which passengers see has high necessity to increase DOL of a compressive stress layer on the surface of a glass sheet in order to prevent breakage by a flying stone or the like. On the other hand, even in the same surface as the central region, a non-exposed region (for example, a peripheral region shadowed by a body of vehicles) free of possibility colliding with a flying stone or the like has low necessity to increase DOL of the compressive stress layer on the surface of a glass sheet.

Internal tensile stress (CT) inside a sheet thickness tends to increase as DOL increases. For this reason, when large DOL is given to a region having low necessity to increase DOL, CT increases more than necessary. Therefore, the present inventors have thought that the increase of CT more than necessary can be suppressed by decreasing DOL in a region having low necessity to increase DOL and increasing DOL in a region having high necessity to increase DOL.

Furthermore, by that DOL continuously changes, in the above specific example, DOL does not steeply change in an intermediate region occupying between the central region and a peripheral region, and thus perspective distortion is difficult to be generated in a glass sheet.

In the chemically strengthened glass of the present embodiment, at least a part of the first main surface is chemically strengthened. In other words, only a part of the first main surface may be chemically strengthened or the whole of the first main surface may be chemically strengthened. In addition to a part or the whole of the first main surface, at least a part (a part or the whole) of the second surface may be also chemically strengthened.

In the present embodiment, the term "a depth of a compressive stress layer (DOL) continuously changes" means to include the embodiment where DOL monotonically increases or decreases in a predetermined region, the embodiment where DOL continuously changes through one or plural inflection points in a predetermined region, and the like.

A glass sheet used in the chemically strengthened glass of the present embodiment is not particularly limited so long as it is ion-exchangeable, and can be appropriately selected, for example, from soda lime glass, aluminosilicate glass, borosilicate glass, aluminoborosilicate glass and the like, and used.

One example of a composition of the glass sheet used in the present embodiment includes a glass containing, in composition represented by mol% based on oxides, 50 to 80% of SiO₂, 0.1 to 30% of Al₂O₃, 3 to 30% of LiO₂+Na₂O+K₂O, 0 to 25% of MgO, 0 to 25% of CaO and 0 to 5% of ZrO₂, but the composition is not particularly limited. More specifically, the following compositions of glasses are exemplified. For example, the term "containing 0 to 25% of MgO" means that MgO is not essential, but may be contained in an amount up to 25%.
(i) Glass containing, in composition represented by mol% based on oxides, 63 to 73% of SiO₂, 0.1 to 5.2% of Al₂O₃, 10 to 16% of Na₂O, 0 to 1.5% of K₂O, 5 to 13% of MgO and 4 to 10% of CaO.
(ii) Glass containing, in composition represented by mol% based on oxides, 50 to 74% of SiO₂, 1 to 10% of Al₂O₃, 6 to 14% of Na₂O, 3 to 11% of K₂O, 2 to 15% of MgO, 0 to 6% of CaO and 0 to 5% of ZrO₂, wherein the total content of SiO₂ and Al₂O₃ is 75% or less, the total content of Na₂O and K₂O is 12 to 25% and the total content of MgO and CaO is 7 to 15%.
(iii) Glass containing, in composition represented by mol% based on oxides, 68 to 80% of SiO₂, 4 to 10% of Al₂O₃, 5 to 15% of Na₂O, 0 to 1% of K₂O, 4 to 15% of MgO and 0 to 1% of ZrO₂.
(iv) Glass containing, in composition represented by mol% based on oxides, 67 to 75% of SiO₂, 0 to 4% of Al₂O₃, 7 to 15% of Na₂O, 1 to 9% of K₂O, 6 to 14% of MgO and 0 to 1.5% of ZrO₂, wherein the total content of SiO₂ and Al₂O₃ is 71 to 75%, the total content of Na₂O and K₂O is 12 to 20%, and when CaO is contained, the content thereof is less than 1%.
(v) Glass containing, in composition represented by mol% based on oxides, 60 to 72% of SiO₂, 8 to 16% of Al₂O₃, 8 to 18% of Na₂O, 0 to 3% of K₂O, 0 to 10% of MgO and 0 to 5% of ZrO₂, wherein when CaO is contained, the content thereof is less than 1%.

The glass sheet used in the chemically strengthened glass of the present embodiment has two main surfaces of a first main surface and a second main surface, and an edge face adjacent to those main surfaces and forming a sheet thickness, and the two main surfaces may form flat surfaces parallel to each other. However, the form of the glass sheet is not limited to this. For example, the two main surfaces may not be parallel to each other, and the whole or a part of one or both of the two main surfaces may be a curved surface. More specifically, the glass sheet may be, for example, a flat plate-shaped glass sheet free of warp, and may be a curved glass sheet having a curved surface.

The sheet thickness of the glass sheet used in the present embodiment is not particularly limited, but is, for example, preferably 5 mm or less. When the sheet thickness is 5 mm or less, rigidity of the glass sheet itself decreases. As a result, the glass sheet is easy to warp, and one embodiment of the present invention is easy to be manufactured by the manufacturing methods of first embodiment and second embodiment described later.

### (First Embodiment)

The chemically strengthened glass according to first embodiment of the present invention is described below.

The chemically strengthened glass according to the first embodiment of the present invention is, in the chemically strengthened glass of the present invention, a chemically strengthened glass having a curved shape, wherein: the first main surface is a convex surface and the second main surface is a concave surface; the chemically strengthened glass has a first point and a second point which are apart from each other at a distance on the first main surface in a first direction, wherein the first direction (called a predetermined direction) is a direction having the smallest curvature radius in a cross-section including a normal line at the gravity center of the chemically strengthened glass; and the depth of the compressive stress layer continuously changes in at least a part of the region connecting the first point and the second point.

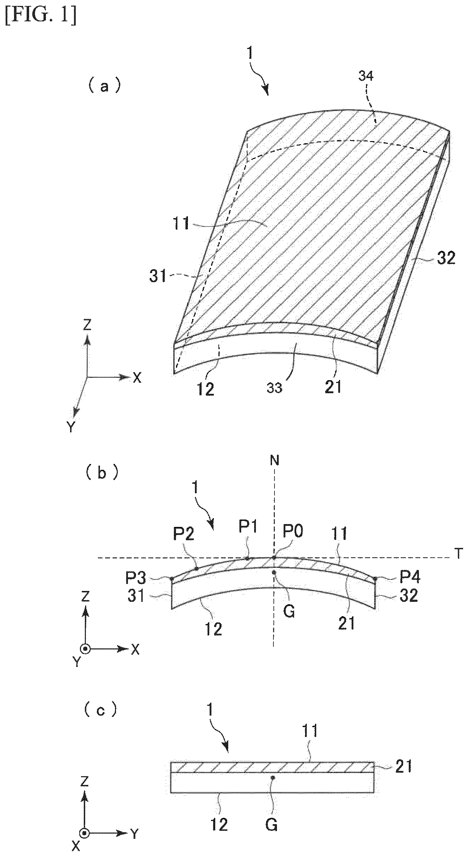

Schematic diagram of a chemically strengthened glass 1 according to one example of the first embodiment of the present invention is shown in Fig. 1. In Fig. 1, Fig. 1(a) is a perspective view of the chemically strengthened glass 1, Fig. 1(b) is a cross-sectional view of the chemically strengthened glass 1 on XZ plane, and Fig. 1(c) is a cross-sectional view of the chemically strengthened glass 1 on YZ plane.

In the chemically strengthened glass 1, a first main surface 11 is chemically strengthened to form a compressive stress layer 21 as shown in Fig. 1(a). Furthermore, the chemically strengthened glass 1 has a curved shape, the first main surface 11 forms a convex surface and a second main surface 12 forms a concave surface. In the chemically strengthened glass shown in Fig. 1, the whole of the first main surface is chemically strengthened, but the present embodiment is not limited to this, and only a part of the first main surface may be chemically strengthened.

In the chemically strengthened glass 1, a direction (first direction) having the smallest curvature radius in a cross-section containing normal line N at the gravity center G of the chemically strengthened glass 1 is X direction, as shown in Fig. 1(b). The chemically strengthened glass 1 of the present embodiment has a first point P1 and a second point P2 with a distance to each other on the first main surface 11 in the first direction (X direction), and DOL continuously changes in a region connecting the first point P1 and the second point P2.

In the chemically strengthened glass 1, DOL monotonically increases toward the central part side (intersection point P0 of tangent T and normal line N) of the glass from a first edge face 31 side (intersection point P3 of the first main surface 11 and the first edge face 31 in XZ plane) in the first main surface 11, and DOL monotonically decreases toward a second edge face 32 side (intersection point P4 of the first main surface 11 and a second edge face 32 in XZ plane) from the central part side (intersection P0 of the tangent T and the normal line N) of the glass. The term "monotonically increases" means that DOL does not have an inflection point between P3 and P0 and tends to increase. The term "monotonically decreases" means that DOL does not have an inflection point between P0 and P4 and tends to decrease. The proportion of the increase or the decrease may be constant and may be not constant. In a certain part region of the region in which DOL monotonically increases or decreases, DOL may not change. In the region connecting the first point P1 and the second point P2, DOL monotonically increases toward the first point P1 side from the second point P2 side, and DOL at the first point P1 is larger than DOL at the second point P2. By that DOL monotonically increases or decreases, high scratch resistance side and low scratch resistance side can be easily distinguished to each other and can be properly used.

However, the first embodiment is not limited to this, and the first point P1 and the second point P2 can be positioned at optional places on the optional first main surface 11 in the first direction (X direction). For example, the first point P1 may be P0, and the second point P2 may be P3 or P4. In this case, DOL at the first point P1 and the DOL at the second point P2 give the maximum absolute difference of DOL on the first main surface in the first direction.

The absolute value of the maximum value of the inclination of change of DOL between the first point P1 and the second point P2 is preferably 150×10⁻³ or less, more preferably 130×10⁻³ or less, still more preferably 100×10⁻³ or less and still further preferably 70×10⁻³ or less. This can make it difficult to generate perspective distortion in the glass sheet between the first point P1 and the second point P2. In obtaining the maximum value of the inclination of change of DOL between the first point P1 and the second point P2, the first point P1 and the second point P2 may be, for example, adjacent two points at the time of measuring DOL on the first main surface in the first direction in the pitch of 1 mm.

The absolute value of the minimum value of the inclination of change of DOL between the first point P1 and the second point P2 is preferably 0.01×10⁻³ or more, more preferably 0.05×10⁻³ or more and still more preferably 0.1×10⁻³ or more. By this, the chemically strengthened glass can be preferably used in uses requiring different chemical strengthening properties between different regions in the same surface of the chemically strengthened glass.

DOL changes over preferably 10 mm or more, more preferably 15 mm or more and still more preferably 20 mm or more on the first direction. Perspective distortion of the glass sheet becomes difficult to be remarkable by that DOL gradually changes over a wide range in a predetermined direction.

In the present embodiment, the maximum value of DOL exists at the gravity center of the chemically strengthened glass. In other words, according to the present embodiment, a peripheral region having small DOL of the chemically strengthened glass 1 is used in an assembly part or the like that is shielded by other member, and an in-plane region having large DOL thereof is used in a portion or the like that is exposed outside. In more detail, the increase of CT more than necessary can be suppressed by decreasing DOL in a region having low necessity of increasing DOL and increasing DOL in a region having high necessity of increasing DOL, and breakage of the chemically strengthened glass 1 can be prevented. The term "exists at the gravity center" is interpreted to encompass that it is present in a region expanding with a certain radius from the gravity center to such an extent that the effect of the present invention is not impaired.

Furthermore, for example, the first point P1 and the second point P2 may be located across the intersection point P0, and in this case, DOL in the region connecting the first point P1 and the second point P2 continuously changes as the intersection point P0 being an inflection point. Furthermore, in this case, DOL at the first point P1 and DOL at the second point P2 may be different and may be equal.

In the chemically strengthened glass of the first embodiment, it is preferred that the maximum absolute difference of the depth of the compressive stress layer on the first main surface in the first direction is larger than the maximum absolute difference of the depth of the compressive stress layer on the first main surface in a second direction, wherein the second direction is a direction having the largest curvature radius in a cross-section including a normal line of the chemically strengthened glass. This can respond to various demands of distribution of DOL between different regions in the same surface. The term "largest curvature radius" includes infinite curvature radius, that is, a direction that is not curved.

In the chemically strengthened glass 1, a cross-section shape in YZ plane is a rectangular shape as shown in Fig. 1(c), and a curvature radius in the cross-section containing normal line N at the gravity center G of the chemically strengthened glass 1 is largest in Y direction (curvature radius is infinity). Therefore, the second direction in this case is Y direction. Furthermore, a depth of the compressive stress layer on the first main surface 11 in the Y direction (second direction) is constant, and the maximum absolute difference of the depth of the compressive stress layer on the first main surface 11 in the Y direction (second direction) is 0.

However, the first embodiment is not limited to this, and the chemically strengthened glass of the first embodiment may be curved in two directions of the first direction and the second direction intersecting with the first direction at a predetermined angle. For example, the chemically strengthened glass 1 may be curved in two directions of X direction to serve as the first direction and the second direction intersecting with the first direction (X direction) at a predetermined angle (for example, Y direction intersecting at an angle of 90°).

Furthermore, when the glass sheet is curved as in the present embodiment, the glass sheet can respond to the demand of various glass shapes, such as uses in automobiles and uses in electronic devices.

It is preferred that the first main surface 11 is chemically strengthened in the whole region on the first main surface 11 in the first direction. By that a boundary between the chemically strengthened region and the region that has not been chemically strengthened is not present on the first main surface 11, tensile stress is difficult to be generated on the first main surface 11 in the region of its boundary periphery. Similarly, it is preferred that the first main surface 11 is chemically strengthened in the whole region on the first main surface 11.

The preferred embodiment according to the first embodiment can be applied to each embodiment including a second embodiment and a third embodiment, in addition to a modification example of the first embodiment described later, without particular restriction.

One embodiment of a method for manufacturing the chemically strengthened glass of the first embodiment is described below.

The method for manufacturing the chemically strengthened glass of the first embodiment according to the one embodiment includes an application step of applying an inorganic salt for chemical strengthening to at least a part of the first main surface of the glass sheet, and a heat treatment step of heat-treating the glass sheet in the state that the glass sheet is curved such that the first main surface is a convex surface and the second main surface is a concave surface.

The application step is described below.

As the inorganic salt for chemical strengthening used in the application step, the conventional inorganic salts are used. For example, it has a role of exchanging alkali metal ions having small ionic radius (typically, Li ions or Na ions) on the glass surface for alkali ions having larger ionic radius (typically, K ions) and forming a compressive stress layer on the glass surface.

The composition of the inorganic salt is not particularly limited, but, for example, contains a potassium compound.

Additives such as a solvent, and a thickener such as an organic resin and an organic solvent may be added to the inorganic salt.

The amount of additives added to the inorganic salt used in the present invention is not particularly limited.

It is preferable that viscosity of the inorganic salt used in the present invention is adjustable according to each process from the standpoint of easy application. For example, it is preferred that the viscosity at 20°C is generally 200 to 100000 mPa. The viscosity of the inorganic salt can be measured by, for example, a viscometer (PM-2B manufactured by Malcom Co., Ltd.) or a viscosity cup (NK-2 manufactured by Anest Iwata Corporation). As a method for applying an inorganic salt to the front surface and back surface of a glass sheet, the conventional coater is used, and the method is not particularly limited.

The heat treatment step is described below.

In the present manufacturing method, the chemically strengthened glass according to the first embodiment can be obtained by conducting a heat treatment step of heat-treating the glass sheet in the state that the glass sheet is curved such that the first main surface is a convex surface and the second main surface is a concave surface, after the application step.

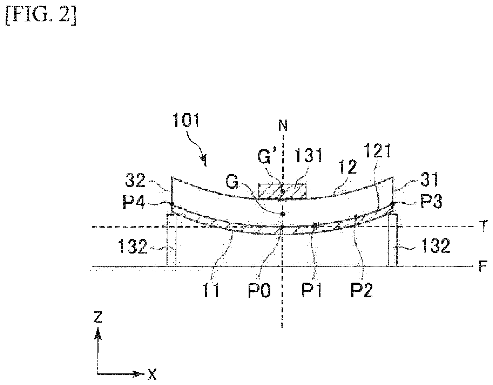

A schematic diagram according to one embodiment of the heat treatment step is shown in Fig. 2. In Fig. 2, an inorganic salt 121 is applied to a first main surface 11 of a glass sheet 101. The glass sheet 101 is arranged on a flat surface F such that both ends of the first main surface 11 side of the glass sheet 101 is located on a support 132 with a second main surface 12 being upper side and the first main surface 11 having the inorganic salt 121 applied thereto being lower side. A load is applied to the glass sheet 101 by that a weight 131 is placed on the second main surface 12 at a position that the gravity center G' of the weight 131 is on the normal line N. By this, the glass sheet 101 becomes the state of having been curved such that the first main surface is a convex surface and the second main surface is a concave surface. The absolute value of bending moment in the first main surface 11 is distributed so as to monotonically increase toward the central part side (intersection P0 of tangent T and normal line N) of the glass from a first edge face 31 side (intersection P3 of the first main surface 11 and the first edge face 31 in XZ plane) in the main surface 11, and monotonically decrease toward a second edge face 32 side (intersection P4 of the first main surface 11 and the second edge face 32 in XZ plane) from the central part side (intersection P0 of tangent T and normal line N) of the glass. Furthermore, even though the glass sheet 101 deforms, the bending moment is continuously applied to the glass sheet 101 by the weight 131.

When the heat treatment is applied to the glass sheet 101 in this state, an ion-exchange reaction occurs on the first main surface 11, and the compressive stress layer 21 is formed on the main surface 11. At this time, the compressive stress layer is deeply formed in a region having larger absolute value of the bending moment and the compressive stress layer is shallowly formed in a region having smaller absolute value of the bending moment. As a result, the chemically strengthened glass 1 shown in Fig. 1 is obtained.

This principle can be assumed as follows. When a load is applied to the second main surface 12 and the first main surface becomes a convex surface as in the present method, tensile stress is generated on the whole first main surface 11 by the generation of bending moment. The tensile stress is largest at P0 as the point of action of a load and smallest at P3 and P4 as supporting points. It is considered that a distance between glass molecules spreads at the respective places of the first main surface 11 according to a size of the tensile stress, and dispersion of alkali ions in a sheet thickness direction is accelerated. As a result, the chemically strengthened glass 1 shown in Fig. 1 is obtained.

The heat treatment temperature is appropriately set depending on the kind of the inorganic salt. In general, the heat treatment temperature is preferably 350 to 600°C and more preferably 400 to 550°C.

The heat treatment time can be appropriately set. In general, the heat treatment time is preferably 5 minutes to 24 hours and more preferably 30 minutes to 4 hours, from reaching a predetermined heat treatment temperature.

Embodiment of applying a load to the glass sheet 101 is not limited to the embodiment shown in Fig. 2, and may be any embodiment so long as a load can be applied so as to curve the glass sheet such that the first main surface becomes a convex surface and the second main surface becomes a concave surface. For example, the own weight of the glass sheet may be utilized without using the weight 131.

To stop the chemical strengthening treatment, for example, the chemically strengthened glass after the heat treatment is washed and the inorganic salt on the surface is removed.

### (Modification Example of First Embodiment)

Chemically strengthened glass according to a modification example of the first embodiment of the present invention is described below.

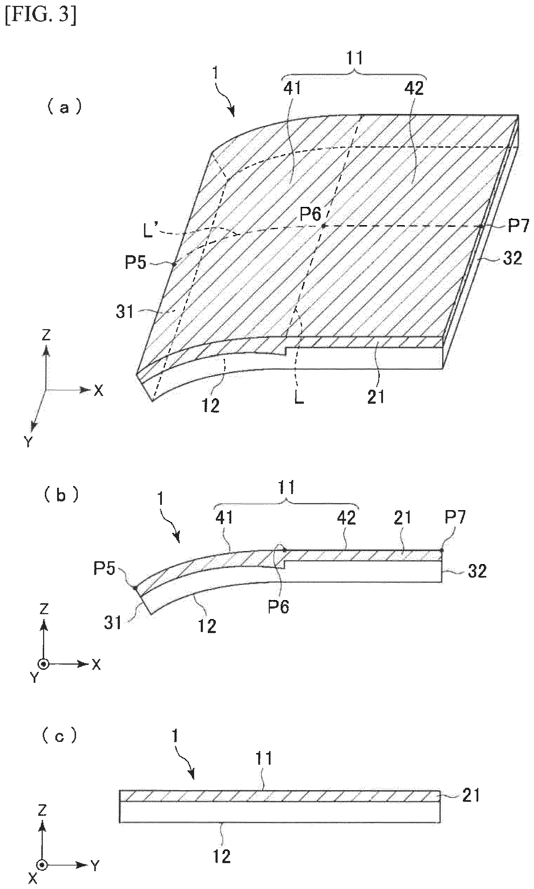

A schematic diagram of the chemically strengthened glass according to the modification example of the first embodiment is shown in Fig. 3. In Fig. 3, Fig. 3(a) is a perspective view of the chemically strengthened glass according to the modification example of the first embodiment, Fig. 3(b) is a cross-sectional view of the chemically strengthened glass in XZ plane containing a dotted line L', and Fig. 3(c) is a cross-sectional view of the chemically strengthened glass in YZ plane containing a dotted line L.

In the chemically strengthened glass 1 according to the modification example of the first embodiment, a first main surface 11 has a curved surface region 41 and a flat surface region 42 as the dotted line L being the boundary. In the curved surface region 41, DOL continuously changes and monotonically increases toward the side near a second edge face 32 opposite a first edge face 31 (an end point P6 side of the curved surface region 41 in Fig. 3(b)) from the first edge face 31 side (the side of an intersection P5 of the first main surface 11 and the first edge face 31 in Fig. 3(b)). Furthermore, DOL decreases at the boundary between the curved surface region 41 and the flat surface region 42 (the region connecting the end point P6 of the curved surface region 41 and an intersection P7 connecting the first main surface 11 and a second edge face 32, in Fig. 3(b)), and DOL is uniform in the flat surface region 42.

In the case of the present embodiment, DOL is largest at the end point P6 as the boundary of the curved surface region 41 and the flat surface region 42.

The inclination of change of DOL at the boundary of the curved surface region 41 and the flat surface region 42 is sharp as compared with the inclination of change of DOL in the curved surface region 41.

The inclination is emphasized in Fig. 3, and DOL is not always nearly vertically changed at the end point P6.

The term "curvature radius at a cross-section containing normal line at the gravity center of a chemically strengthened glass" may be, for example, in the case of the cross section on the XZ plane containing dotted line L, represented by a radius of a circle passing the intersection P5, the end point P6 and the intersection P7 of the present embodiment'. In other words, in the region connecting the representative 2 points (the intersection P5 and the intersection P7), the depth of the compressive stress layer only has to continuously change even in a part, and not only a curved part but a flat part may be present between the intersection P5 and the intersection P7.

The chemically strengthened glass 1 according to the modification example of the first embodiment shown in Fig. 3 is the same as the chemically strengthened glass 1 shown in Fig. 1 in other items. Therefore, the detail description of the other items is omitted.

When the chemically strengthened glass has the structure having the curved surface region 41 and the flat surface region 42 as in the present embodiment, the glass can responds to demands of various glass shapes, such as uses for automobiles, uses for electronic devices and uses for buildings. Furthermore, because the maximum value of DOL exists at the boundary between a curved surface region and a flat surface region, breakage of the chemically strengthened glass due to damage on the boundary can be prevented. Furthermore, by having the flat surface region with a constant size of DOL and the curved surface 41 with continuously changing DOL, the chemically strengthened glass can simultaneously respond to the demand of distribution of DOL and the demand of a glass shape, between different regions in the same plane. The term "exists at the boundary between the curved surface region and the flat surface region" is interpreted to include the existence in the region having a certain width from the boundary in the extent that does not impair the effect of the present invention.

One embodiment of a method for manufacturing the chemically strengthened glass according to a modification example of the first embodiment is described below.

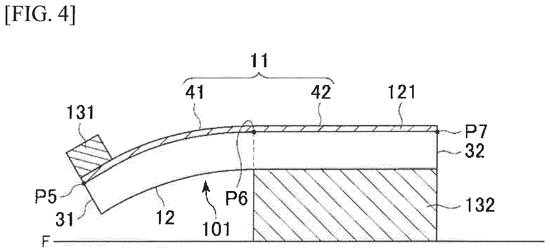

To manufacture the chemically strengthened glass according to the present modification example, after an application step where an inorganic salt is nearly uniformly applied to at least a part of the first main surface of the glass sheet, the glass sheet is heat-treated in the state of applying a load to the glass sheet to curve the glass sheet, for example, as shown in Fig. 4.

Specifically, a part of the glass sheet 101 containing the second edge face 32 is placed on a support 132 with the first main surface 11 having an inorganic salt 121 applied thereto being a upper side and the second main surface 12 being a lower side, and a weight 131 is placed at the first edge face 31 side on the first main surface 11, thereby applying a load such that the curved surface region 41 and the flat surface region 42 are formed on the first main surface. As a result, the glass sheet 101 has the state of being curved such that the first main surface has a convex surface and the second main surface has a concave surface. The absolute value of bending moment in the curved surface region 41 of the first main surface 11 is distributed so as to monotonically increase toward the side near the second edge face 32 (the end point P6 of the curved surface region in XZ plane) from the first edge face 31 side (the intersection P5 of the first main surface 11 and the first edge face 31 in XZ plane). The bending moment is continuously applied to the glass sheet 101 by the weight 131 even though the glass sheet 101 is deformed. The bending moment is 0 (zero) at the boundary between the curved surface region 41 and the flat plate 42 on the first main surface. Furthermore, the bending moment is 0 (zero) in the flat surface region 42.

By applying the heat treatment to the glass sheet 101 in this state, an ion-exchange reaction occurs on the first main surface 11, the compressive stress layer 21 is formed on the first main surface 11 and the chemically strengthened glass 1 shown in Fig. 3 is obtained.

Thus, the chemically strengthened glass 1 having DOL continuously changed in the first main surface 11 can be obtained by conducting the chemical strengthening treatment in the state that the glass sheet 101 has been curved such that the distribution of a load in the first main surface 11 continuously changes in chemical strengthening of the glass sheet 101 having the inorganic salt 121 applied to the first main surface 11. At this time, the chemically strengthened glass 1 in which DOL in the first main surface 11 has continuously changed in a desired state can be obtained by appropriately adjusting the curved state of the glass sheet 101 such that a higher absolute value of bending moment is generated in the region requiring higher DOL.

### (Second Embodiment)

A chemically strengthened glass according the second embodiment of the present invention is described below.

The chemically strengthened glass according to the second embodiment of the present invention is, in the chemically strengthened glass of the present invention, a chemically strengthened glass including a chemically strengthened first edge face and a second edge face opposite the first edge face, and having a first point and a second point which are apart from each other at a distance in a first straight line wherein the first straight line is a straight line intersecting with a first arris at which the first main surface is in contact with the first edge face and a second arris at which the first main surface is in contact with the second edge face and passing the in-plane center of the first main surface, wherein the depth of the compressive stress layer continuously changes in at least a part of the region connecting the first point and the second point.

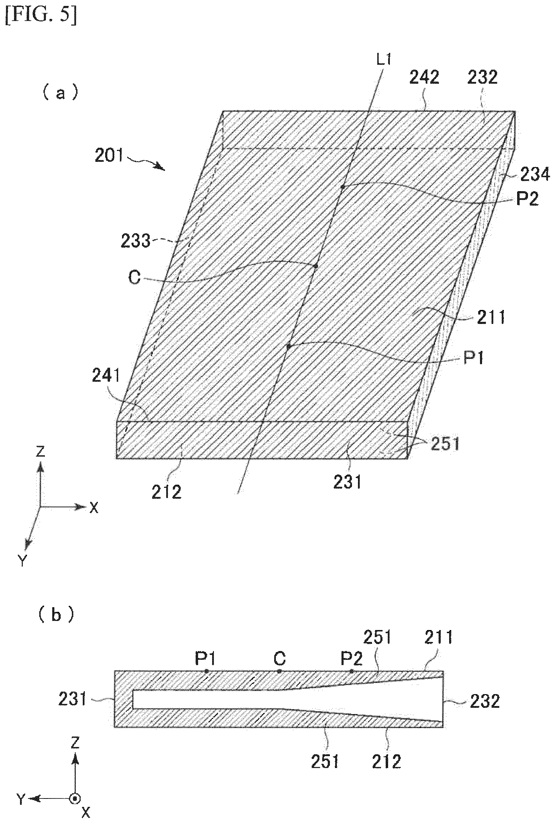

A schematic diagram of a chemically strengthened glass 201 according to one example of the second embodiment of the present invention is shown in Fig. 5. In Fig. 5, Fig. 5(a) is a perspective view of the chemically strengthened glass 201, and Fig. 5(b) is a cross-sectional view of the chemically strengthened glass 201 in YZ plane containing a first straight line L1.

As shown in Fig. 5(a), the chemically strengthened glass 201 has a flat sheet shape and has a first main surface 211 and a second main surface 212 opposite the first main surface 211. The first main surface 211 is connected to the second main surface 212 by four edge faces of a first edge face 231, a second edge face 232, a third edge face 233 and a fourth edge face 234. The first edge face 231 is chemically strengthened, and the second edge face 232 faces the first edge face 231. A compressive stress layer 251 by chemical strengthening is formed on the first main surface 211, and similar to the first main surface 211, the compressive stress layer 251 by chemical strengthening is formed on the second main surface 212. The third edge face 233 and the fourth edge face 234 are chemically strengthened.

Referring to Fig. 5(a), when a straight line intersecting with a first arris 241 at which the first main surface 211 is in contact with the first edge face 231 and a second arris 242 at which the first main surface 211 is in contact with the second edge face 232 and passing an in-plane center C on the first main surface 211 is a first straight line L1, the chemically strengthened glass 201 has a first point P1 and a second point P2 at a distance to each other on the first straight line L1. Furthermore, in the chemically strengthened glass 201, a depth of the compressive stress layer monotonically decreases toward the second point P2 side from the first point P1 side in the region connecting the first point P1 and the second point P2, as shown in Fig. 5(b). More specifically, DOL is uniform at the first point P1 side from the in-plane center C, and DOL monotonically decreases toward the second point P2 side from the in-plane center C at the second point P2 side from the in-plane center C.

In the present embodiment, the maximum value of DOL exists on any of the arrises of the chemically strengthened glass 201. In other words, according to the present embodiment, of the chemically strengthened glass 201, a part at the side having small DOL is used in an assembling part to be shielded with other member, and a part at the side having large DOL is used in a part exposing outside. Specifically, DOL is decreased in a region having low necessity to increase DOL, and DOL is increased in a region having high necessity to increase DOL. As a result, CT can be suppressed from being increased more than necessary, and breakage of the chemically strengthened glass 201 can be prevented. Furthermore, by that DOL monotonically increases or decreases, the side having high scratch resistance and the side having low scratch resistance can be easily distinguished to each other, and therefore can be property used.

The term "exists on an arris" is interpreted to include the existence in a region having a certain width along the arris to an extent that the effect of the present invention is not impaired.

One embodiment of a method for manufacturing the chemically strengthened glass of the second embodiment is described below.

The method for manufacturing the chemically strengthened glass of the second embodiment according to the one embodiment includes a chemical strengthening treatment step of conducting a chemical strengthening treatment in the state that a part of a glass sheet is dipped in a molten salt such that the first edge face of the glass sheet is dipped in a molten salt for a chemical strengthening treatment.

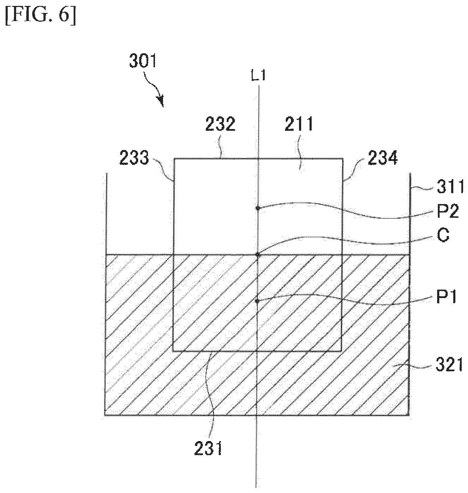

A schematic diagram according to one embodiment of a chemical strengthening treatment step is shown in Fig. 6. As shown in Fig. 6, the chemical strengthening treatment is conducted by dipping a glass sheet 301 in a molten salt 321 for a chemical strengthening treatment in a container 311. In the present embodiment, the chemical strengthening treatment is conducted in the state of dipping a part of a glass sheet 301 in the molten salt 321 such that the first edge face 231 is dipped in the molten salt 321, the first point P1 on the first main surface is dipped in the molten salt 321 and the second point P2 is not dipped in the molten salt 321. By conducting the chemical strengthening treatment as above, the chemically strengthened glass 201 shown in Fig. 6 is obtained.

Examples of the molten salt for a chemical strengthening treatment include potassium nitrate, and alkali sulfates and alkali chlorides, such as sodium sulfate, potassium sulfate, sodium chloride and potassium chloride. Those molten salts may be used alone or as mixtures of several kinds thereof.

In the chemical strengthening treatment, metal ions having small ionic radius (typically, Na ions or Li ions) in the glass sheet is substituted with metal ions having large ionic radius by bringing the glass sheet into contact with a melt of a metal salt (for example, potassium nitrate) containing metal ions having large ionic radius (typically, K ions) by dipping or the like.

In the present embodiment, the treatment conditions of the chemical strengthening treatment are not particularly limited, and appropriate conditions are selected considering properties and composition of a glass, the kind of a molten salt, chemical strengthening properties such as surface compressive stress (CS), depth of compressive stress (DOL) and the like required in the chemically strengthened glass finally obtained, and the like. For example, the chemical strengthening treatment can be conducted by dipping the glass sheet in a molten salt such as potassium nitrate heated to 300 to 550°C for 5 minutes to 20 hours. The heating temperature of the molten salt is preferably 300 to 450°C, and the dipping time of the glass sheet in the molten salt is preferably 0.1 to 15 hours.

To stop the chemical strengthening treatment reaction, washing and drying are conducted after dipping the glass sheet in the molten salt.

According to the knowledge of the present inventors, it has been clarified that by conducting the chemical strengthening treatment by the embodiment shown in Fig. 6, the compressive stress layer is formed on not only the region containing the first point P1 dipped in the molten salt 321, but the region containing the second point P2 that was not dipped in the molten salt 321, on the first main surface 211. Furthermore, in the chemically strengthened glass 201 obtained, it was clarified that the depth of the compressive stress layer monotonically decreases toward the second point P2 side from the first point P1 side in the region connecting the first point P1 and the second point P2.

In the chemically strengthened glass of the present embodiment, the reason that the depth of the compressive stress layer is formed in a state of continuously changing in the region connecting the first point and the second point on the first straight line is not entirely clear, but it is assumed as follows. K ions entered the region that contains the first point P1 and was dipped in the molten salt 321 (hereinafter referred to as a "strengthened part") and Na ions of the region that contains the second point P2 and was not dipped in the molten salt 321 (hereinafter referred to as a "non-strengthened part") perform ion exchange. The strengthened part is brought into contact with the molten salt 321 having high K ion concentration, and is therefore under the environment where K ions are always supplied and ion exchange is easily performed. On the other hand, the non-strengthened part is ion-exchanged depending on K ion concentration of the region adjacent to the strengthened part side. As a result, ease of ion exchange gradually decreases toward the region apart from the strengthened part of the non-strengthened region from the vicinity of the boundary between the strengthened part and the non-strengthened part. It is considered that the depth of the compressive stress layer has continuously changed by this.

In the chemically strengthened glass of the present embodiment, typically the compressive stress layer is formed on the second main surface, similar to the first main surface, but the present embodiment is not limited to this.

In the chemically strengthened glass of the present embodiment, the compressive stress layer may be formed on the entire first main surface, or the compressive stress layer may be formed on only a part of the first main surface. Furthermore, the compressive stress layer may be formed on the entire second main surface, or the compressive stress layer may be formed on only a part of the second main surface.

Furthermore, the shape of the glass sheet used in the chemically strengthened glass of the present embodiment may be other shape such as a curved shape, other than a flat sheet shape.

### (Third Embodiment)

A chemically strengthened glass according to a third embodiment of the present invention is described below.

The chemically strengthened glass of the present embodiment is, in the chemically strengthened glass of the present invention, a chemically strengthened glass including a first edge face connecting a first main surface and a second main surface and a second edge face opposite the first edge face, and having a first point and a second point which are apart from each other at a distance on the first straight line wherein the first straight line is a straight line intersecting with a first arris at which the first main surface is in contact with the first edge face and a second arris at which the first main surface is in contact with the second edge face and passing the in-plane center of the first main surface, wherein a depth of a compressive stress layer continuously changes in at least a part of a region connecting the first point and the second point. Also the chemically strengthened glass of the present embodiment has a third point and a fourth point which are apart from each other at a distance on the second straight line wherein the second straight line is a straight line intersecting with a third arris at which the second main surface is in contact with the first edge face and a fourth arris at which the second main surface is in contact with the second edge face and passing the in-plane center of the second main surface, wherein a depth of a compressive stress layer continuously changes in at least a part of a region connecting the third point and the fourth point.

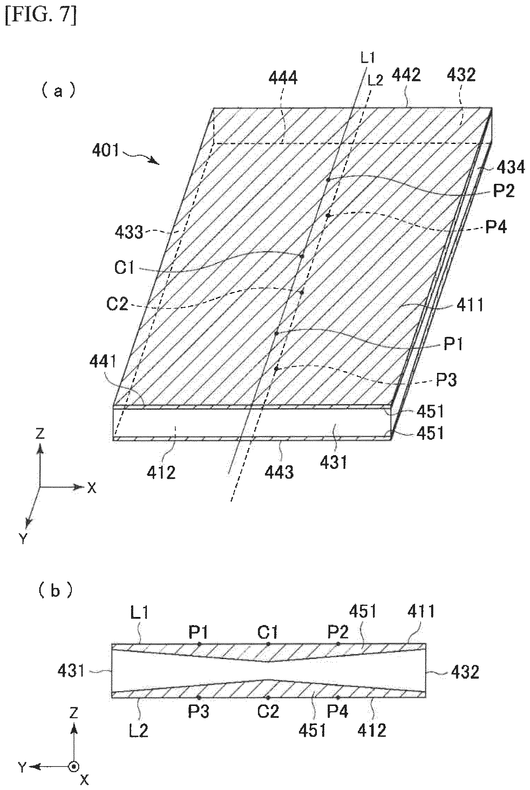

A schematic diagram of a chemically strengthened glass 401 according to one example of a third embodiment of the present invention is shown in Fig. 7. In Fig. 7, Fig. 7(a) is a perspective view of a chemically strengthened glass 401, and Fig. 7(b) is a cross-sectional view of the chemically strengthened glass 401 in YZ plane containing a first straight line L1 and a second straight line L2.

As shown in Fig. 7(a), the chemically strengthened glass 401 has a flat sheet shape, and has a first main surface 411 and a second main surface 412 opposite the first main surface 411, wherein the first main surface 411 is connected to the second main surface 412 by four edge faces of a first edge face 431, a second edge face 432, a third edge face of 433 and a fourth edge face of 434. A compressive stress layer 451 by chemical strengthening is formed on the first main surface 411, and similar to the first main surface 411, the compressive stress layer 451 by chemical strengthening is formed on the second main surface 412.

Referring to Fig. 7(a), when a straight line intersecting with a first arris 441 at which the first main surface 411 is in contact with the first edge face 431 and a second arris 442 at which the first main surface 411 is in contact with the second edge face 432 and passing an in-plane center C1 on the first main surface 411 is a first straight line L1, the chemically strengthened glass 401 has a first point P1 and a second point P2 at a distance to each other on the first straight line L1. Furthermore, in the chemically strengthened glass 401, a depth of the compressive stress layer 251 monotonically increases toward the in-plane center C1 side from the first point P1 side and monotonically decreases toward the second point P2 side from the in-plane center C1 side in the region connecting the first point P1 and the second point P2, as shown in Fig. 7(b).

Referring to Fig. 7(a), when a straight line intersecting with a third arris 443 at which the second main surface 421 is in contact with the first edge face 431 and a fourth arris 444 at which the second main surface 421 is in contact with the second edge face 432 and passing an in-plane center C2 on the second main surface 421 is a second straight line L2, the chemically strengthened glass 401 has a third point P3 and a fourth point P4 at a distance to each other on the second straight line L2. Furthermore, in the chemically strengthened glass 401, a depth of the compressive stress layer 251 monotonically increases toward the in-plane center C2 side from the third point P3 side and monotonically decreases toward the fourth point P4 side from the in-plane center C2 side in the region connecting the third point P3 and the fourth point P4, as shown in Fig. 7(b).

In the present embodiment, the maximum value of DOL exists on the gravity center of the chemically strengthened glass. In other words, according to the present embodiment, of the chemically strengthened glass 401, a peripheral region having small DOL is used in an assembling part to be shielded with other member, and an in-plane region having large DOL is used in a part exposing outside. Specifically, DOL is decreased in a region having low necessity to increase DOL, and DOL is increased in a region having high necessity to increase DOL. As a result, CT can be suppressed from being increased more than necessary, and breakage of the chemically strengthened glass 401 can be prevented. The term "exists on the gravity center" is interpreted to include the existence in a region spreading with a certain radius from the gravity center to an extent that the effect of the present invention is not impaired.

One embodiment of a method for manufacturing the chemically strengthened glass of the third embodiment is described below.

Similar to the first embodiment, after applying the inorganic salt for chemical strengthening to at least a part of the first main surface of the glass sheet, the glass sheet is heat-treated in the state that the glass sheet is curved such that the first main surface is a convex surface and the second main surface is a concave surface. Next, after applying the inorganic salt for chemical strengthening to at least a part of the second main surface of a glass sheet (chemically strengthened glass) having a compressive stress layer formed on the first main surface, the glass sheet (chemically strengthened glass) is heat-treated while applying a load to the glass sheet (chemically strengthened glass) such that a curved state of the glass sheet (chemically strengthened glass) having the compressive stress layer formed on the first main surface is decreased. Thus, a chemically strengthened glass of the third embodiment is obtained.

The chemically strengthened glass 401 shown in Fig. 7 has a flat sheet shape, but the chemically strengthened glass of the present embodiment is not limited to this, and can have a curved shape depending on various conditions such as application conditions of the inorganic salt, load application conditions and heat treatment conditions.

### (Chemical Strengthening Properties)

In the chemically strengthened glass according to one embodiment of the present embodiment, DOL at the first point may be larger than DOL at the second point. Alternatively, in the chemically strengthened glass according to another embodiment of the present embodiment, DOL at the first point may equal to DOL at the second point.

In the chemically strengthened glass according to one embodiment of the present embodiment, DOL may continuously increase in at least a part of a region connecting the first point and the second point. In this case, one or more inflection point may be present.

In the chemically strengthened glass according to one embodiment of the present embodiment, DOL may monotonically increase toward the first point from the second point in a region connecting the first point and the second point.

In the chemically strengthened glass of the present embodiment, the maximum value of the surface compressive stress (CS) of the compressive stress layer in the first main surface is preferably 200 MPa or more, more preferably 300 MPa or more and still more preferably 400 MPa or more, from the standpoint of the improvement of scratch resistance.

Similarly, in the case where the compressive stress layer is also provided on the second main surface, the maximum value of the surface compressive stress of the compressive stress layer in the second main surface is preferably 200 MPa or more, more preferably 300 MPa or more and still more preferably 400 MPa or more, from the standpoint of the improvement of scratch resistance.

The chemically strengthened glass of the present embodiment can be effectively used in uses requiring different chemical strengthening properties between different regions in the same surface of the chemically strengthened glass. For example, the chemically strengthened glass can be effectively used as a cover glass of mobile devices such as a mobile phone and a smart phone, and display devices such as a television, a personal computer and a tough panel. Furthermore, the chemically strengthened glass can be effectively used in building materials such as a window glass of buildings such as house and building, vehicle members (for example, a windshield, a mirror, a window glass and an interior member) used in vehicles such as automobiles, optical lenses, medical equipment and tableware.

### EXAMPLES

The present invention is described below by examples, but the invention is not construed as being limited to those.

The chemically strengthened glass of Example 1 according to Fig. 5 (second embodiment) was manufactured as follows. As shown in Fig. 6, the glass sheet 301 having a size of vertical (distance between the first edge face 231 and the second edge face 232) × horizontal (distance between the third edge face 233 and the fourth edge face 234) × thickness of 100 mm × 50 mm × 1.1 mm was dipped in the molten salt 321 such that only the half side containing the first edge face 231 of the glass sheet 301 is brought into contact with the molten salt 321. The molten salt 321 contained 99.0 mass % of KNO₃ and 1.0 mass % of NaNO₃. The temperature of the molten salt 321 was 465°C, and the dipping time of the glass sheet 301 in the molten salt 321 was 2 hours. The composition of the glass sheet 301 before chemical strengthening was as follows.

Glass composition (in mol% based on oxides): SiO₂ 64.4%, Al₂O₃ 8.0%, Na₂O 12.5%, K₂O 4.0%, MgO 10.5%, CaO 0.1%, SrO 0.1%, BaO 0.1%, ZrO₂ 0.5%

Thereafter, the glass sheet 211 was taken out of the molten salt 321, followed by washing and drying. Thus, the chemically strengthened glass according to Example 1 was manufactured.

Regarding the chemically strengthened glass of Example 1, the intersection point of the first straight line L1 and the second edge face 232 was used as a start point (distance: 0 mm), and K ion X-ray intensities corresponding to K ion concentrations at 6 points of 7.75 mm, 23.25 mm, 40.5 mm, 60 mm, 77.5 mm and 92.5 mm that are distances from the start point along the first straight line L1 were measured by EPMA (Electron Probe Micro Analyzer).

Furthermore, as a result of measuring DOL at 4 points of 5 mm, 25 mm, 75 mm and 95 mm that are distances from the start point along the first straight line L1, by a surface stress meter (FSM-7000H) manufactured by Orihara Industrial Co., Ltd., those were 18.1 µm, 25.1 µm, 43.5 µm and 43.8 µm, respectively.

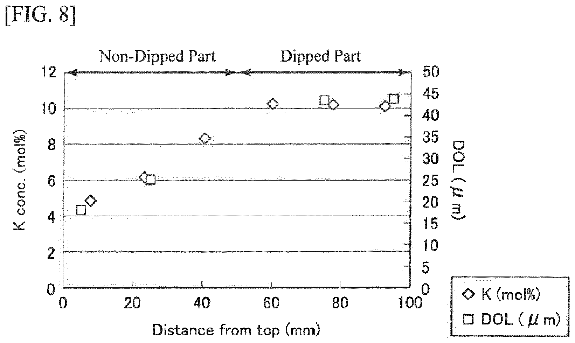

The measurement results of those K ion concentrations and DOL are shown in Fig. 8.

As is understood from Fig. 8, in the chemically strengthened glass of Example 1, DOL monotonically increased toward the first edge face 231 side from the second edge face 232 side along the first straight line L1. Furthermore, the inclination of change of DOL in the non-dipped part was 0.45×10⁻³, and DOL continuously changed.

The chemically strengthened glass of Example 2 according to Fig. 1 (first embodiment) was manufactured as follows. A glass sheet having a size of vertical (distance between the first edge face 31 and the second edge face 32) × horizontal (distance between the third edge face 33 and the fourth edge face 34) × thickness of 300 mm × 50 mm × 0.33 mm was prepared, and a paste-like molten salt was uniformly applied to the first main surface 11 thereof. Thereafter, as shown in Fig. 2, the glass sheet was placed on a support such that the first main surface 11 faced downward, and the weight 131 was placed on the second main surface 12 such that the gravity center G' of the weight 131 was on the normal line N. The glass sheet was heat-treated at 450°C for 10 hours under this state. The composition of the glass sheet 301 before chemical strengthening was as follows.

Glass composition (in mol% based on oxides): SiO₂ 64.4%, Al₂O₃ 8.0%, Na₂O 12.5%, K₂O 4.0%, MgO 10.5%, CaO 0.1%, SrO 0.1%, BaO 0.1%, ZrO₂ 0.5%

Thereafter, the glass sheet was washed and dried. Thus, the chemically strengthened glass according to Example 2 was manufactured.

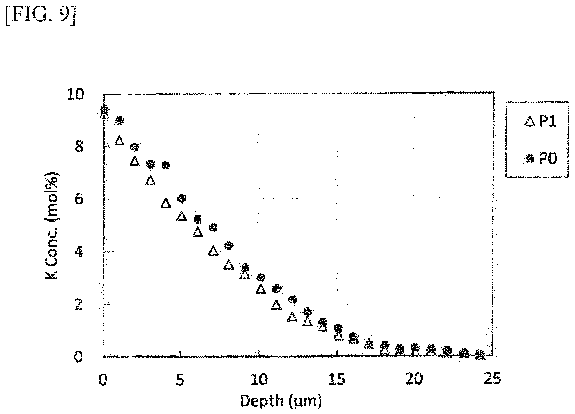

Regarding the chemically strengthened glass of Example 2, the direction having the smallest curvature radius in the cross-section containing normal line at the gravity center of the chemically strengthened glass was defined as the first direction (the direction of the tangent T in Fig. 1(b)), and K ion concentration was measured at the intersection P0 of the tangent T and the normal line N and the point P1 that is 120 mm apart from the point P0 on the first direction, by a scanning electron microscope equipped with EDX. The results obtained are shown in Fig. 9.

As is understood from Fig. 9, in the chemically strengthened glass of Example 2, K ions deeply enter at P0 as compared with P1. The difference between P0 and P1 is considered to be generated according to the continuous change of bending moment continuously given to the glass sheet during chemical strengthening.

Although the present invention has been described in detail and by reference to the specific embodiments, it is apparent to one skilled in the art that various modifications or changes can be made without departing the spirit and scope of the present invention.

This application is based on Japanese Patent Application (No. 2016-044674) filed March 8, 2016, the disclosure of which is incorporated herein by reference in its entity.

### DESCRIPTION OF REFERENCE NUMERALS AND SIGNS

- 1: Chemically strengthened glass
- 11: First main surface
- 12: Second main surface
- 21: Compressive stress layer
- 31: First edge face
- 32: Second edge face
- 33: Third edge face
- 34: Fourth edge face
- 101: Glass sheet
- 121: Inorganic salt
- 131: Weight
- 132: Support
- 201: Chemically strengthened glass
- 211: First main surface
- 212: Second main surface
- 231: First edge face
- 232: Second edge face
- 233: Third edge face
- 234: Fourth edge face
- 241: First arris
- 242: Second arris
- 251: Compressive stress layer
- 301: Glass sheet
- 311: Container
- 321: Molten salt
- 401: Chemically strengthened glass
- 411: First main surface
- 412: Second main surface
- 431: First edge face
- 432: Second edge face
- 433: Third edge face
- 434: Fourth edge face
- 441: First arris
- 442: Second arris
- 443: Third arris
- 444: Fourth arris
- 451: Compressive stress layer

## Claims

1. A chemically strengthened glass comprising a first main surface and a second main surface opposite the first main surface, wherein at least a part of the first main surface is chemically strengthened, and
a depth of a compressive stress layer in at least a part of the first main surface continuously changes.

2. The chemically strengthened glass according to claim 1, comprising a part having an absolute value of the maximum value of an inclination of a change of the depth of the compressive stress layer being 150×10⁻³ or less, in at least a part of the first main surface.

3. The chemically strengthened glass according to claim 1 or 2, wherein the depth of the compressive stress layer changes over 10 mm or more in a predetermined direction in the first main surface.

4. The chemically strengthened glass according to any one of claims 1 to 3, wherein the whole first main surface is chemically strengthened.

5. The chemically strengthened glass according to any one of claims 1 to 4, having a curved shape, wherein:
the first main surface is a convex surface and the second main surface is a concave surface;
the chemically strengthened glass has a first point and a second point which are apart from each other at a distance on the first main surface in a first direction, wherein the first direction is a direction having the smallest curvature radius in a cross-section including a normal line at the gravity center of the chemically strengthened glass; and
the depth of the compressive stress layer continuously changes in at least a part of the region connecting the first point and the second point.

6. The chemically strengthened glass according to claim 5, wherein
the maximum absolute difference of the depth of the compressive stress layer on the first main surface in the first direction is larger than the maximum absolute difference of the depth of the compressive stress layer on the first main surface in a second direction, wherein the second direction is a direction having the largest curvature radius in a cross-section including a normal line of the chemically strengthened glass.

7. The chemically strengthened glass according to any one of claims 1 to 4, comprising a chemically strengthened first edge face and a second edge face opposite the first edge face, and
having a first point and a second point which are apart from each other at a distance in a first straight line wherein the first straight line is a straight line intersecting with a first arris at which the first main surface is in contact with the first edge face and a second arris at which the first main surface is in contact with the second edge face and passing the in-plane center of the first main surface,
wherein the depth of the compressive stress layer continuously changes in at least a part of the region connecting the first point and the second point.

8. The chemically strengthened glass according to any one of claims 5 to 7, wherein the depth of the compressive stress layer at the first point is larger than the depth of the compressive stress layer at the second point.

9. The chemically strengthened glass according to any one of claims 5 to 8, wherein the depth of the compressive stress layer monotonically increases toward the first point from the second point in the region connecting the first point and the second point.

10. The chemically strengthened glass according to any one of claims 1 to 9, comprising a curved surface region and a flat surface region, wherein the depth of the compressive stress layer continuously changes in the curved surface region.

11. The chemically strengthened glass according to claim 10, wherein the maximum value of the depth of the compressive stress layer exists at the boundary between the curved surface region and the flat surface region.

12. The chemically strengthened glass according to any one of claims 1 to 11, wherein the maximum value of the depth of the compressive stress layer exists at the gravity center of the chemically strengthened glass.

13. The chemically strengthened glass according to any one of claims 1 to 11, wherein the maximum value of the depth of the compressive stress layer exists on any of the arrises of the chemically strengthened glass.

14. The chemically strengthened glass according to any one of claims 1 to 13, wherein at least a part of the second main surface is chemically strengthened.
